# EUROPÄISCHE PATENTSCHRIFT

(11) **EP 1 561 961 B1**
(45) Veröffentlichungstag und Bekanntmachung des Hinweises auf die Patenterteilung: **12.09.2007**
(21) Anmeldenummer: 05001523.9
(22) Anmeldetag: 26.01.2005
(51) Int. Cl.: F16D 21/06, F16D 25/10

(54) **Mehrfach-Kupplungseinrichtung**
Mulitple clutch device
Dispositif d'embrayage multiple

(30) Priorität: 05.02.2004 DE 102004005872
(43) Veröffentlichungstag der Anmeldung: 10.08.2005
(73) Patentinhaber: LuK Lamellen und Kupplungsbau Beteiligungs KG, 77815 Bühl (DE)
(72) Erfinder: Grethel, Marco, 77830 Bühlertal (DE); Homm, Manfred, 77815 Bühl-Neusatz (DE); Vetter, Christoph, 76131 Karlsruhe (DE)

(56) Entgegenhaltungen:
- EP-A- 1 464 860
- DE-U1- 9 114 528
- GB-A- 2 036 203
- US-A- 2 712 373

## Beschreibung

Die Erfindung betrifft eine Doppel-Kupplungseinrichtung, für die Anordnung in einem Antriebsstrang eines Kraftfahrzeugs zwischen einer Antriebseinheit und einem Getriebe, nach dem Oberbegriff des Anspruchs 1. Eine solche Kupplung ist aus US-A-2,712,373 bekannt.

Aus der deutschen Offenlegungsschrift DE 100 04 190 A1 ist eine Doppel-Kupplungseinrichtung für die Anordnung in einem Antriebsstrang eines Kraftfahrzeugs zwischen einer Antriebseinheit und einem Getriebe bekannt. Die bekannte Kupplungseinrichtung weist zur Momentenübertragung zwischen der Antriebseinheit und dem Getriebe eine einer ersten Getriebeeingangswelle des Getriebes zugeordnete erste Kupplungsanordnung und eine einer zweiten Getriebeeingangswelle des Getriebes zugeordnete zweite Kupplungsanordnung auf. Außerdem weist die bekannte Kupplungseinrichtung eine als Eingangsseite der Kupplungseinrichtung dienende Kupplungseinrichtungsnabe auf, an der eine Innenverzahnung ausgebildet ist, über welche die Kupplungseinrichtungsnabe mit einer Pumpenantriebswelle gekoppelt ist. Die beiden Getriebeeingangswellen sind als Hohlwellen ausgebildet und die Pumpenantriebswelle verläuft im Inneren der beiden Getriebeeingangswellen. Die mit der Pumpenantriebswelle gekoppelte Kupplungseinrichtungsnabe ist auf der der Antriebseinheit zugewandten Seite der Kupplungseinrichtung angeordnet.

Aufgabe der Erfindung ist es, eine Doppelkupplungseinrichtung, für die Anordnung in einem Antriebsstrang eines Kraftfahrzeugs zwischen einer Antriebseinheit und einem Getriebe, zu schaffen, die einfach aufgebaut und kostengünstig herstellbar ist.

Die Aufgabe ist bei einer Doppel-Kupplungseinrichtung, insbesondere einer Doppel-Kupplungseinrichtung, für die Anordnung in einem Antriebsstrang eines Kraftfahrzeugs zwischen einer Antriebseinheit und einem Getriebe nach Anspruch 1 gelöst. Bei dieser Anordnung kann die aus dem Stand der Technik bekannte Pumpenantriebswelle entfallen. Außerdem kann eine der Getriebeeingangswellen als Vollwelle ausgebildet sein, das heißt, es brauchen nicht beide Getriebeeingangswellen als Hohlwellen ausgebildet zu sein. Darüber hinaus liefert diese Anordnung den Vorteil, dass die Betriebsfluidpumpe direkt über die Kupplungseinrichtungsnabe angetrieben und in der Nähe der Kupplungseinrichtung angeordnet sein kann. Dadurch verkürzt sich die Länge der Betriebsfluidübertragungsleitungen zwischen Pumpe und Kupplungseinrichtung.

Ein bevorzugtes Ausführungsbeispiel der Doppel-Kupplungseinrichtung ist dadurch gekennzeichnet, dass die Betriebsfluidpumpe von einer Innenzahnradpumpe gebildet wird, die ein Pumpenritzel umfasst, das mit der Kupplungseinrichtungsnabe gekoppelt ist. Das liefert den Vorteil, dass kein zusätzlicher Aufwand für den Antrieb der Betriebsfluidpumpe anfällt. Außerdem ist keine komplett eigenständige Lagerung der Pumpe erforderlich.

Ein weiteres bevorzugtes Ausführungsbeispiel der Doppel-Kupplungseinrichtung ist dadurch gekennzeichnet, dass an der Kupplungseinrichtungsnabe mehrere, insbesondere zwei, Mitnehmerfinger in axialer Richtung abstehen, die in komplementär ausgebildete Taschen eingreifen, die an dem Pumpenritzel vorgesehen sind. Vorzugsweise sind die Mitnehmerfinger einstückig mit der Kupplungseinrichtungsnabe ausgebildet. Zur Übertragung des Pumpenantriebsmoments zwischen der Kupplungseinrichtungsnabe und der Betriebsfluidpumpe können auch andere Wellen-/Nabenverbindungen, wie Zahnwellenverbindungen, eingesetzt werden.

Ein weiteres bevorzugtes Ausführungsbeispiel der Doppel-Kupplungseinrichtung ist dadurch gekennzeichnet, dass an dem Stehlager ein Zentrierbund ausgebildet ist. Über den Zentrierbund, der im eingebauten Zustand vorzugsweise aus dem Pumpengehäuse herausragt, kann die Betriebsfluidpumpe beim Einbau relativ zu einem Kupplungseinrichtungsgehäuse und/oder einem Getriebegehäuse zentriert werden.

Ein weiteres bevorzugtes Ausführungsbeispiel der Doppel-Kupplungseinrichtung ist dadurch gekennzeichnet, dass zwischen der Betriebsfluidpumpe und den Kupplungsanordnungen eine hydraulische Steuerungseinrichtung angeordnet ist. Über die hydraulische Steuerungseinrichtung kann die Betätigung der Kupplungsanordnungen gesteuert werden. Vorzugsweise umfasst die hydraulische Steuerungseinrichtung mehrere Ventileinrichtungen. Durch die erfindungsgemäße Anordnung der hydraulischen Steuerungseinrichtung zwischen der Betriebsfluidpumpe und den Kupplungsanordnungen werden die Leitungswege zur Übertragung des Betriebsfluids von der Betriebsfluidpumpe zu den Kupplungsanordnungen erheblich verkürzt.

Ein weiteres bevorzugtes Ausführungsbeispiel der Doppel-Kupplungseinrichtung ist dadurch gekennzeichnet, dass die hydraulische Steuerungseinrichtung von einer Steuerplatte gebildet wird, in der Kanäle zum Zu- und Abführen von Betriebsfluid vorgesehen sind. Durch die erfindungsgemäße Anordnung der hydraulischen Steuerungseinrichtung können die Kanäle kurz gehalten werden.

Ein weiteres bevorzugtes Ausführungsbeispiel der Doppel-Kupplungseinrichtung ist dadurch gekennzeichnet, dass in der Steuerplatte Übergabeöffnungen für Betriebsfluid vorgesehen sind, die mit Übergabeöffnungen in Verbindung stehen, die in der Kupplungseinrichtungsnabe vorgesehen sind. Von der Kupplungseinrichtungsnabe gelangt das Betriebsfluid dann zu Kolben, die zur Betätigung der Kupplungsanordnungen dienen.

Ein weiteres bevorzugtes Ausführungsbeispiel der Doppel-Kupplungseinrichtung ist dadurch gekennzeichnet, dass wenigstens eine der Kupplungsanordnungen eine nass laufende Kupplungsanordnung, insbesondere eine Lamellen-Kupplungsanordnung, ist, die mit Hilfe des von der Betriebsfluidpumpe gelieferten Betriebsfluids betätigbar ist. Vorzugsweise handelt es sich bei beiden Kupplungsanordnungen um Lamellen-Kupplungsanordnungen.

Bei einem Antriebsstrang für ein Kraftfahrzeug, mit einer zwischen einer Antriebseinheit und einem Getriebe angeordneten Kupplungseinrichtung ist die vorab angegebene Aufgabe durch die Verwendung einer vorab beschriebenen Kupplungseinrichtung gelöst. Bei der Antriebseinheit handelt es sich vorzugsweise um eine Brennkraftmaschine.

Ein bevorzugtes Ausführungsbeispiel des Antriebsstrangs ist dadurch gekennzeichnet, dass zwischen der Antriebseinheit und der Kupplungseinrichtung eine Torsionsschwngungsdämpfungseinrichtung angeordnet ist. Die Torsionsschwingungsdämpfungseinrichtung dient dazu, im Betrieb der Antriebseinheit auftretende Stöße so zu dämpfen, dass sie nicht auf die Kupplungsanordnungen beziehungsweise das Getriebe übertragen werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine Doppel-Kupplungseinrichtung gemäß einer ersten Ausführungsform der Erfindung im Längsschnitt;
- Figur 2: die Ansicht eines Schnitts entlang der Linie II-II in Figur 1;
- Figur 3: einen vergrößerten Ausschnitt III aus Figur 1 und
- Figur 4: einen Antriebsstrang eines Kraftfahrzeugs mit einer erfindungsgemäßen Kupplungseinrichtung und einem antriebsseitig angeordneten Torsionsschwingungsdämpfer.

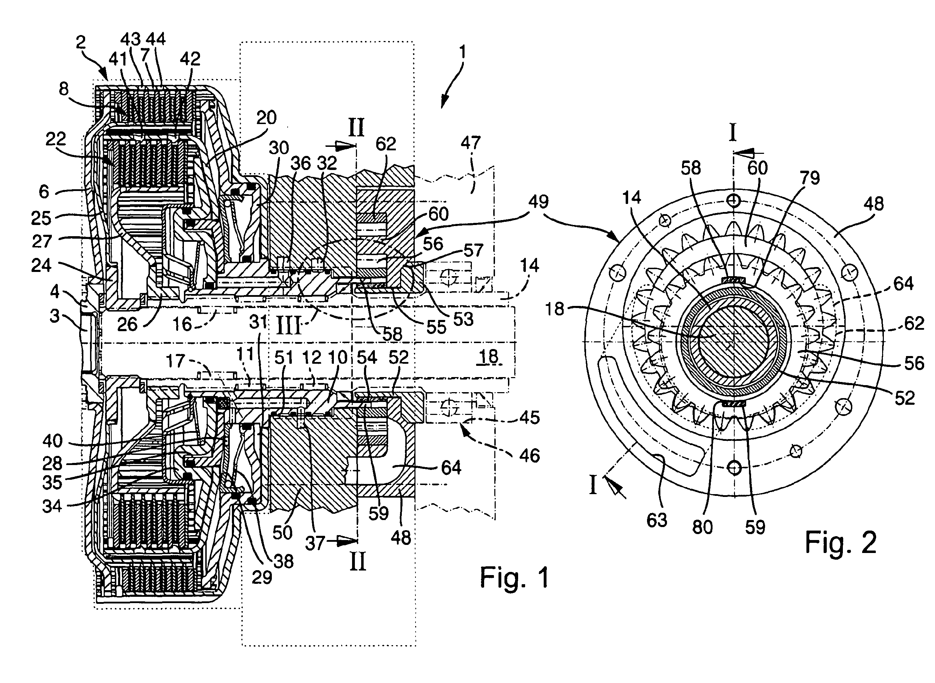

In Figur 1 ist ein Teil eines Antriebsstrangs 1 eines Kraftfahrzeugs dargestellt. Zwischen einer Antriebseinheit und einem Getriebe ist eine Doppelkupplung 2 angeordnet. Von der Antriebseinheit, zum Beispiel einer Brennkraftmaschine, ist in Figur 1 nur ein Ende einer Abtriebswelle 3 dargestellt. Auf der entgegengesetzten Seite des Antriebsstrangs ist das Getriebe angeordnet, von dem in Figur 1 nur ein Getriebegehäuseabschnitt 47 gezeigt ist.

Die Abtriebswelle 3 der Antriebseinheit ist mit einer Außenverzahnung ausgestattet, die sich mit einer Innenverzahnung in Eingriff befindet, die an einem Kupplungseingangsteil 4 ausgebildet ist, das auch als Kupplungseingangsnabe bezeichnet werden kann. An dem Kupplungseingangsteil 4 ist mittels einer Schweißverbindung radial außen ein Trägerblech 6 drehfest angebracht, das zur Drehmomentübertragung zwischen dem Kupplungseingangsteil 4 und einem Außenlamellenträger 7 einer ersten Lamellen-Kupplungsanordnung 8 dient. Der Außenlamellenträger 7 erstreckt sich in Richtung zum Getriebe radial nach innen zu einer Kupplungsnabe 10, an welcher der Außenlamellenträger 7 angeschweißt ist.

Die Kupplungsnabe 10 ist mit Hilfe von Nadellagern 11, 12 am äußeren Umfang einer ersten Getriebeeingangswelle 14 drehbar gelagert, die als Hohlwelle ausgebildet ist. Im Inneren der hohlen ersten Getriebeeingangswelle 14 ist mit Hilfe von Nadellagern 16, 17 eine zweite Getriebeeingangswelle18 drehbar gelagert, die als Vollwelle ausgebildet ist. Die zweite Getriebeeingangswelle 18 erstreckt sich koaxial zur ersten Getriebeeingangswelle 14 durch diese hindurch.

An der Kupplungsnabe 10 ist axial weiter in Richtung zur Antriebseinheit ein Außenlamellenträger 20 einer zweiten Lamellen-Kupplungsanordnung 22 drehfest angebracht, deren Lamellenpaket vom Lamellenpaket der ersten Lamellen-Kupplungsanordnung 8 ringartig umgeben wird. Die beiden Außenlamellenträger 7 und 20 sind durch die Kupplungsnabe 10 drehfest miteinander verbunden und stehen gemeinsam über das Trägerblech 6 mit der Abtriebswelle 3 der Antriebseinheit in Momentenübertragungsverbindung. Bezogen auf den normalen Momentenfluss von der Antriebseinheit zum Getriebe dienen die Außenlamellenträger 7 und 20 jeweils als Eingangsseite der Lamellen-Kupplungsanordnungen 8 und 22.

Auf der Getriebeeingangswelle 18 ist mittels einer Keilnutenverzahnung oder dergleichen ein Nabenteil 24 eines Innenlamellenträgers 25 der ersten Lamellen-Kupplungsanordnung 8 drehfest angeordnet. In entsprechender Weise ist auf der radial äußeren Getriebeeingangswelle 14 mittels einer Keilnutenverzahnung oder dergleichen ein Nabenteil 26 eines Innenlamellenträgers 27 der zweiten Lamellen-Kupplungsanordnung 22 drehfest angeordnet. Bezogen auf den Regel-Momentenfluss von der Antriebseinheit in Richtung zum Getriebe dienen die Innenlamellenträger 25 und 27 als Ausgangsseite der ersten beziehungsweise zweiten Lamellen-Kupplungsanordnung 8 beziehungsweise 22.

In die Doppelkupplung 2 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 8 zugeordneter Betätigungskolben 30 ist axial zwischen dem sich radial erstreckenden Abschnitt des Außenlamellenträgers 7 der ersten Lamellen-Kupplungsanordnung 8 und dem sich radial erstreckenden Abschnitt des Außenlamellenträgers 20 der zweiten Lamellen-Kupplungsanordnung 22 angeordnet und an dem Außenlamellenträger 7 und der Kupplungsnabe 10 mittels Dichtungen axial verschiebbar. Zwischen dem Außenlamellenträger 7 und dem Betätigungskolben 30 ist eine Druckammer 31 ausgebildet. Zwischen dem Betätigungskolben 30 und dem Außenlamellenträger 20 ist ein Fliehkraft-Druckausgleichsblech 29 angeordnet, das eine Fliehkraft-Druckausgleichskammer begrenzt. Radial innen ist in dem Fliehkraft-Druckausgleichsblech 29 eine Austrittsbohrung 28 für Fluid vorgesehen.

Die Druckkammer 31 steht über einen Druckmediumkanal 32 mit einer Betriebsfluidpumpe in Verbindung, auf die später eingegangen wird. Zwischen dem Außenlamellenträger 20 der zweiten Lamellen-Kupplungsanordnung 22 und dem Innenlamellenträger 27 der zweiten Lamellen-Kupplungsanordnung 22 ist ein der zweiten Lamellen-Kupplungsanordnung 22 zugeordneter Betätigungskolben 34 axial verschiebbar angeordnet. Zwischen dem Außenlamellenträger 20 und dem Betätigungskolben 34 ist eine Druckkammer 35 ausgebildet, die zur Steuerung des Betätigungskolbens 34 dient. Die Druckkammer 35 steht über einen Druckmediumkanal 36 mit der Betriebsfluidpumpe in Verbindung. Die Druckmediumkanäle 32, 36 sind radial außerhalb der Kupplungsnabe 10 angeordnet. Diametral zu den Druckmediumkanälen 32, 36 ist radial außerhalb der Kupplungsnabe 10 ein Kühlfluidkanal 37 vorgesehen.

Im normalen Betriebszustand sind die Druckkammern 31, 35 vollständig mit Druckmedium, zum Beispiel Hydrauliköl, kurz Öl, gefüllt. Durch eine Zunahme des Drucks in den Druckkammern 31, 35 werden die Lamellen-Kupplungsanordnungen 8, 22 über die Betätigungskolben 30, 34 entgegen einer Rückstellfederkraft von Membranfedern 38, 40 betätigt. Das Kühlfluid gelangt über den Kühlfluidkanal 37 zu den Lamellen-Kupplungsanordnungen 8, 22, um einen Teil der im Betrieb dort auftretenden Wärme abzuführen. Durchlassöffnungen 41 bis 44 in den Außenlamellenträgem 20 und 7 ermöglichen den Austritt des Kühlfluids.

Auf der Getriebeseite ist die Getriebeeingangswelle 14 mit Hilfe einer Radiallagereinrichtung 46 drehbar gelagert. Die Radiallagereinrichtung 46 ist in einem Getriebegehäuseabschnitt 47 untergebracht. An dem Getriebegehäuseabschnitt 47 ist ein Pumpengehäuse 48 einer Innenzahnradpumpe 49 befestigt. Zwischen dem Pumpengehäuse 48 und dem radial inneren Abschnitt des Außenlamellenträgers 7 der Doppelkupplung 2 ist eine Steuerplatte 50 angeordnet, die ein Durchgangsloch 51 aufweist. Die Steuerplatte 50 ist an dem Pumpengehäuse 48 und somit an dem Getriebegehäuseabschnitt 47 befestigt. Der Getriebegehäuseabschnitt 47, das Pumpengehäuse 48 und die Steuerplatte 50 sind also feststehend an dem Kraftfahrzeug angebracht. In dem Durchgangsloch 51 der Steuerplatte 50 ist die Kupplungsnabe 10 drehbar angeordnet. Der mit der Kupplungsnabe 10 drehfest verbundene Außenlamellenträger 7 dreht sich im Betrieb ebenfalls relativ zu der Steuerplatte 50.

Das Pumpengehäuse 48 weist eine zentrale Durchgangsbohrung 55 auf, die zum Getriebe hin einen Absatz 57 mit einem vergrößerten Innendurchmesser aufweist. In die Durchgangsbohrung 55 des Pumpengehäuses 48 ist ein Stehlager 52 eingepresst. Das Stehlager 52 weist einen Bund 53 auf, der an dem Absatz 57 des Pumpengehäuses 48 anliegt. Dem Absatz 57 bildet einen Anschlag für den Bund 53 bei der Montage des Stehlagers 52. Der Bund 53 steht zum Getriebe hin über die dem Getriebe zugewandte Oberfläche des Pumpengehäuses 48 hinaus. Der überstehende Teil des Bundes 53 ist in einer Ausnehmung 45 aufgenommen, die in dem Getriebegehäuseabschnitt 47 ausgebildet und in der die Lagereinrichtung 46 aufgenommen ist. Über den teilweise in der Ausnehmung 45 aufgenommenen Bund 53 des Stehlagers 52 kann die Steuerplatte 50 und die Pumpe 49 und gegebenenfalls die Kupplungsnabe 10 relativ zu dem Getriebegehäuseabschnitt 47 zentriert werden.

Radial außerhalb des Stehlagers 52 ist eine Gleitlagerbuchse 54 angeordnet, mit Hilfe der ein Pumpenritzel 56 drehbar auf dem Stehlager 52 gelagert ist. In Zusammenschau mit dem in Figur 2 dargestellten Querschnitt sieht man, dass radial innen in dem Pumpenritzel 56 zwei Taschen 79, 80 ausgenommen sind, in welche Mitnehmerfinger 58, 59 eingreifen. Die Mitnehmerfinger 58, 59 sind einstückig mit der Kupplungsnabe 10 verbunden und dienen dazu, das Pumpenritzel 56 anzutreiben, also ein Drehmoment von der Kupplungsnabe 10 auf das Pumpenritzel 56 zu übertragen.

Im Inneren weist das Pumpengehäuse 48 eine Festsichel 60 auf, die radial außerhalb des Pumpenritzels 56 angeordnet ist. Radial außerhalb der Festsichel 60 ist ein Pumpenhohlrad 62 angeordnet, das sich auf der Festsichel 60 diametral gegenüberliegenden Seite mit dem Pumpenritzel 56 in Eingriff befindet. Wenn sich das Pumpenritzel 56 und das damit in Eingriff befindliche Pumpenhohlrad 62 im Uhrzeigersinn drehen, dann wird ein Betriebsfluid, das zwischen Pumpenritzel 56 und Pumpenhohlrad 62 angeordnet ist, im Bereich einer Saugniere 63 angesaugt und im Bereich einer Druckniere 64 mit Druck beaufschlagt. Das mit Druck beaufschlagte Betriebsfluid gelangt über (nicht dargestellte) Kanäle, die in der Steuerplatte 50 vorgesehen sind, zu Ventileinrichtungen, und dann, in Abhängigkeit von dem Schaltzustand der Ventileinrichtungen, in die Druckmedienkanäle 32, 36, die in der Steuerplatte 50 ausgebildet sind.

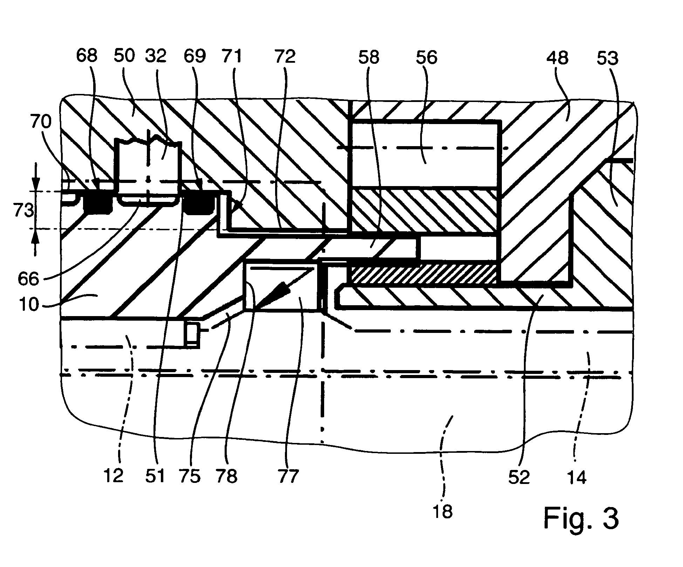

In der vergrößerten Ansicht der Figur 3 sieht man, dass der Druckmediumkanal 32 im Bereich einer Ringnut 66 mündet, die radial außen in der Kupplungsnabe 10 ausgebildet ist. Die Kupplungsnabe 10 dreht sich im Betrieb relativ zu der feststehenden Steuerplatte 50. Das radial innere Ende des Druckmediumkanals 32 und die zugehörige Ringnut 66 bilden eine Übergabestelle, über die Druckmedium aus der Steuerplatte 50 in die Kupplungsnabe 10 gelangt. Zur Abdichtung der Übergabestelle sind seitlich der Ringnut 66 in entsprechenden Ringnuten Gleitringdichtungen 68, 69 aufgenommen, die an der Steuerplatte 50 anliegen. In gleicher Weise sind, wie aus Figur 1 hervorgeht, die Übergabestellen zwischen Steuerplatte 50 und Kupplungsnabe 10 am radial inneren Ende des Druckmediumkanals 36 und des Kühlfluidkanals 37 ausgebildet.

Das zentrale Durchgangsloch 51 in der Steuerplatte 50 weist einen Abschnitt 70 auf, in dem die Ringnut 66 angeordnet ist. Auf der Getriebeseite schließt sich an den Abschnitt 70 ein Absatz 71 an, auf den ein Abschnitt 72 folgt, der einen kleineren Außendurchmesser aufweist als der Abschnitt 70. Der Unterschied zwischen dem Radius des Abschnitts 70 und dem Radius des Abschnitts 72 ist mit 73 bezeichnet. Die Mitnehmerfinger 58, 59 gehen von dem Abschnitt 72 der Kupplungsnabe 10 aus und weisen daher den gleichen Außendurchmesser auf.

Radial innen ergibt sich lagerungsbedingt zwischen der Kupplungsnabe 10 und der Getriebeeingangswelle 14 ein Spalt 75. Um im Betrieb der Betriebsfluidpumpe 49 einen unerwünschten Eintritt von Luft durch den Spalt 75 zu verhindern, ist am getriebeseitigen Ende der Kupplungsnabe 10 ein Radialwellendichtring 77 angeordnet. Der Radialwellendichtring 77 ist teilweise in einer Zylindersenkung 78 aufgenommen, die in der getriebeseitigen Stirnseite der Kupplungsnabe 10 ausgenommen ist.

Die Pumpe 49 ist an der getriebeseitigen Stirnseite der Steuerplatte 50 angeordnet. Daraus ergibt sich folgender Aufbau: Doppelkupplung 2, hydraulische Steuerplatte 50, Pumpe 49. Diese Anordnung liefert den Vorteil, dass die in der Steuerplatte 50 ausgebideten Ölkanäle sowie die in der Doppelkupplungsnabe 10 vorgesehenen Ölkanäle kurz gehalten werden können. Die Ölzu- und Ölabfuhr erfolgt direkt über die Steuerplatte 50 der hydraulischen Steuerung. Die hierfür notwendigen Geometrien sind vollständig in die Steuerplatte integriert.

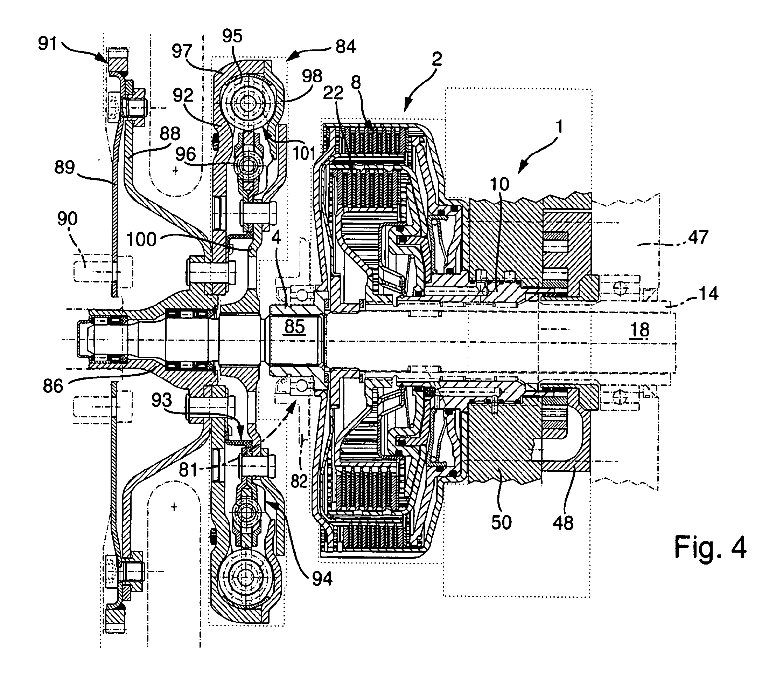

In Figur 4 ist ein Ausführungsbeispiel eines Antriebsstrangs eines Kraftfahrzeugs gezeigt, bei dem zwischen der Antriebseinheit und der Doppelkupplung ein Torsionsschwingungsdämpfer 84 angeordnet ist. Das in Figur 4 dargestellte Ausführungsbeispiel entspricht im grundlegenden Aufbau dem in Figur 1 dargestellten Ausführungsbeispiel. Um Wiederholungen zu vermeiden, wird insoweit auf die vorangegangene ausführliche Beschreibung des in Figur 2 dargestellten Ausführungsbeispiels verwiesen. Gleiche Teile sind mit gleichen Bezugszeichen versehen. Im Folgenden wird nur auf die Unterschiede zwischen den in Figur 1 und 4 dargestellten Ausführungsbeispielen eingegangen.

In Figur 4 sieht man, dass das Kupplungseingangsteil 4 der Doppelkupplung 2 mit Hilfe einer Lagereinrichtung 81 in einem Kupplungsgehäuse 82 drehbar gelagert ist. Das Kupplungsgehäuse 82 kann an dem Getriebegehäuseabschnitt 47 befestigt sein. Der Torsionsschwingungsdämpfer 84 weist ein Ausgangsteil 85 auf, das, zum Beispiel über eine Wellenverzahnung, drehfest mit dem Kupplungseingangsteil 4 verbunden ist. Außerdem weist der Torsionsschwingungsdämpfer 84 ein Eingangsteil 86 auf, das auch als Nabe bezeichnet wird und relativ zu einer (nicht dargestellten) Antriebswelle, insbesondere Kurbelwelle, einer Brennkraftmaschine geführt beziehungsweise zentriert ist. Die Antriebswelle der Brennkraftmaschine ist mit Hilfe einer Verschraubung 90 drehfest mit einem Trägerblech verbunden, das auch als Flexplate bezeichnet wird. Radial außen ist an dem Trägerblech 89 ein Anlasserzahnkranz 91 befestigt. Das Trägerblech 89 ist über eine Schraub- oder Nietverbindung an einem Trägerblech 88 befestigt, das auch als Driveplate bezeichnet wird. Das Trägerblech 88 ist über eine gestrichelt dargestellte Schraubverbindung mit einer Primärmasse 92 des Torsionsschwingungsdämpfers 84 drehfest verbunden.

Mit Hilfe einer Lagereinrichtung 93 ist eine Sekundärmasse 94 drehbar zu der Primärmasse 92 gelagert. Die Primärmasse 92 ist mit der Sekundärmasse 94 über eine komprimierbare Energiespeicher 95, 96 aufweisende Dämpfungseinrichtung 101 antriebsmäßig verbunden. Die Energiespeicher 95, 96, hier in Form von in Umfangsrichtung längichen Schraubenfedern mit großem Kompressionsweg, sind in Kammem aufgenommen, die zumindest teilweise mit einem viskosen Medium gefüllt sein können. Die Kammem sind durch Blechteile 97, 98 begrenzt.

Das Ausgangsteil 85 des Torsionsschwingungsdämpfers 84 geht antriebsseitig in ein flanschförmiges Bauteil 100 über, das radial außen Ausleger aufweist, die sich radial zwischen den Endbereichen mehrerer Energiespeicher 95, 96 erstrecken, die in Umfangsrichtung der Torsionsschwingungsdämpfungseinrichtung 84 angeordnet sind. Bei einer Relativdrehung zwischen dem Flanschteil 100 und der Primärmasse 92 werden die die Dämpfereinrichtung 101 bildenden Energiespeicher 95, 96 komprimiert.

### Bezugszeichenliste

1. Antriebsstrang
2. Doppelkupplung
3. Abtriebswelle
4. Kupplungseingangsteil
5. -
6. Trägerblech
7. Außenlamellenträger
8. erste Lamellen-Kupplungsanordnung
9. -
10. Nabe
11. Nadellager
12. Nadellager
13. ―
14. erste Getriebeeingangswelle
15. -
16. Nadellager
17. Nadellager
18. zweite Getriebeeingangswelle
19. -
20. Außenlamellenträger
21. -
22. zweite Lamellen-Kupplungsanordnung
23. -
24. Nabenteil
25. Innenlamellenträger
26. Nabenteil
27. Innenlamellenträger
28. Austritt
29. Fliehkraft-Druckausgleichsblech
30. Betätigungskolben
31. Druckkammer
32. Druckmediumkanal
33. -
34. Betätigungskolben
35. Druckkammer
36. Druckmediumkanal
37. Ölkühlkanal
38. Membranfeder
39. -
40. Membranfeder
41. Durchlassöffnung
42. Durchlassöffnung
43. Durchlassöffnung
44. Durchlassöffnung
45. Ausnehmung
46. Lagereinrichtung
47. Getriebegehäuseabschnitt
48. Pumpengehäuse
49. Innenzahnradpumpe
50. Steuerplatte
51. Durchgangsloch
52. Stehlager
53. Bund
54. Gleitlagerbuchse
55. Durchgangsbohrung
56. Pumpenritzel
57. Absatz
58. Mitnehmerfinger
59. Mitnehmerfinger
60. Festsichel
61. ―
62. Pumpenhohlrad
63. Saugniere
64. Druckniere
65. -
66. Ringnut
67. ―
68. Gleitringdichtung
69. Gleitringdichtung
70. Abschnitt
71. Stufe
72. Abschnitt
73. Abstand
74. -
75. Spalt
76. ―
77. Radialwellendichtring
78. Zylindersenkung
79. Tasche
80. Tasche
81. Lagereinrichtung
82. Kupplungsgehäuse
83. -
84. Torsionsschwingungsdämpfer
85. Ausgangsteil
86. Eingangsteil
87. ―
88. Tragblech
89. Tragblech
90. Schraube
91. Anlasserzahnkranz
92. Primärmasse
93. Lager
94. Sekundärmasse
95. komprimierbarer Energiespeicher
96. komprimierbarer Energiespeicher
97. Blechteil
98. Blechteil
99. -
100. flanschförmiges Bauteil
101. Dämpfereinrichtung

## Patentansprüche

1. Doppel-Kupplungseinrichtung (2), für die Anordnung in einem Antriebsstrang eines Kraftfahrzeugs zwischen einer Antriebseinheit und einem Getriebe, wobei die Doppel-Kupplungseinrichtung (2) im Wesentlichen zwei Kupplungseinrichtungen (8, 22) für zwei Getriebeeingangswellen (14, 18) und eine Kupplungseinrichtungsnabe (10) aufweist und das getriebeseitige Ende der Kupplungseinrichtungsnabe (10) mit einer Betriebsfluidpumpe (49) gekoppelt ist, wobei die Betriebsfluidpumpe (49) mit einem konzentrischen, rotierenden Innenteil (56) versehen ist, und wobei die Betriebsfluidpumpe (49) radial außerhalb der beiden Getriebeeingangswellen angeordnet ist, **dadurch gekennzeichnet, dass** das Innenteil (56) von radial innen her gestützt wird und dieses Abstützen mittels eines Stehlagers (52) bewerkstelligt wird, welches drehfest mit dem Pumpergehäuse (48) verbunden ist.

2. Doppel-Kupplungseinrichtung (2) nach Anspruch 1, **dadurch gekennzeichnet, dass** an dem Stehlager (52) ein Zentrierbund (53) ausgebildet ist.

3. Doppel-Kupplungseinrichtung (2) nach Anspruch 1 oder 2, **dadurch gekennzeichnet, dass** die Betriebsfluidpumpe (49) als Innenzahnradpumpe ausgebildet ist und dass das Innenteil (56) das Pumpenritzel (56) der Innenzahnradpumpe darstellt.

4. Doppel-Kupplungseinrichtung (2) nach einem der Ansprüche 1 bis 3, **dadurch gekennzeichnet, dass** an der Kupplungseinrichtungsnabe (10) mehrere - insbesondere zwei - Mitnehmerfinger (58,59) in axialer Richtung abstehen, die in komplementär ausgebildete Taschen (79,80) eingreifen, die an dem rotierenden Innenteil (56) vorgesehen sind.

5. Doppel-Kupplungseinrichtung (2) nach einem der vorhergehenden Ansprüche, **dadurch gekennzeichnet, dass** zwischen der Betriebsfluidpumpe (49) und der Doppel-Kupplungseinrichtung (2) eine hydraulische Steuerungseinrichtung (50) angeordnet ist.

6. Doppel-Kupplungseinrichtung (2) nach Anspruch 5, **dadurch gekennzeichnet, dass** die hydraulische Steuerungseinrichtung von einer Steuerplatte (50) gebildet wird, in der Kanäle (32,36,37) zum Zu- und Abführen von Betriebsfluid vorgesehen sind.

7. Doppel-Kupplungseinrichtung (2) nach Anspruch 6, **dadurch gekennzeichnet, dass** in der Steuerplatte (50) Übergabeöffnungen (32) für Betriebsfluid vorgesehen sind, die mit Übergabeöffnungen (66) in Verbindung stehen, die in der Kupplungseinrichtungsnabe (10) vorgesehen sind.

8. Doppel-Kupplungseinrichtung (2) nach einem der vorhergehenden Ansprüche, **dadurch gekennzeichnet, dass** wenigstens eine der Kupplungsanordnungen (8, 22) eine nass laufende Kupplungsanordnung, insbesondere eine Lamellen-Kupplungsanordnung, ist, die mit Hilfe des von der Betriebsfluidpumpe (49) gelieferten Betriebsfluids betätigbar ist.

9. Doppel-Kupplungseinrichtung (2) nach einem der vorhergehenden Ansprüche, **dadurch gekennzeichnet, dass** radial zwischen der äußeren Getriebeeingangswelle (14) und der diese umgebenden Kupplungseinrichtungsnabe (10) eine die Pumpe abdichtende Dichtstelle vorgesehen ist.

10. Doppel-Kupplungseinrichtung (2) nach Anspruch 9, **dadurch gekennzeichnet, dass** die Dichtstelle zumindest einen Radialwellendichtring umfasst.

11. Doppel-Kupplungseinrichtung (2) nach wenigstens einem der vorhergehenden Ansprüche, **dadurch gekennzeichnet, dass** zwischen der äußeren Kontur der Kupplungseinrichtungsnabe (10) und der diese umgebenden, inneren Kontur einer Steuerplatte (50) wenigstens eine Dichtung vorgesehen ist.

12. Doppel-Kupplungseinrichtung (2) nach Anspruch 11, **dadurch gekennzeichnet, dass** zwei axial beabstandete Dichtungen vorgesehen sind, wobei axial zwischen diesen zumindest ein in der Steuerplatte (50) vorgesehener Kanal mündet.

13. Antriebsstrang für ein Kraftfahrzeug, mit einer zwischen einer Antriebseinheit und einem Getriebe angeordneten Doppel-Kupplungseinrichtung (2) nach einem der vorhergehenden Ansprüche.

14. Antriebsstrang nach Anspruch 13, **dadurch gekennzeichnet, dass** zwischen der Antriebseinheit und der Kupplungseinrichtung (2) eine Torsionsschwingungsdämpfungseinrichtung (84) angeordnet ist.

## Claims

1. A dual clutch device (2), for installing in a drive train of a motor vehicle between a drive unit and a transmission, where the dual clutch device (2) has essentially two clutch devices (8, 22) for two transmission input shafts (14, 18) and one clutch device hub (10), and the transmission-side end of the clutch device hub (10) is coupled to an operating fluid pump (49), the operating fluid pump (49) being provided with a concentric, rotating internal part (56), and the operating fluid pump (49) being situated radially outside of the two transmission input shafts,
**characterized in that** the internal part (56) is supported from radially inside, and this support is accomplished by means of a pedestal bearing (52) which is connected to the pump housing (48) in a rotationally fixed connection.

2. The dual clutch device (2) according to Claim 1, **characterized in that** a centering collar (53) is formed on the pedestal bearing (52).

3. The dual clutch device (2) according to Claim 1 or 2, **characterized in that** the operating fluid pump (49) is designed as an internal gear pump, and that the internal part (56) constitutes the pump pinion (56) of the internal gear pump.

4. The dual clutch device (2) according to one of Claims 1 through 3, **characterized in that** on the clutch device hub (10) a plurality of driver fingers (58, 59) - in particular two - protrude in the axial direction, which engage complementarily designed pockets (79, 80) that are provided on the rotating internal part (56).

5. The dual clutch device (2) according to one of the preceding claims, **characterized in that** a hydraulic control device (50) is situated between the operating fluid pump (49) and the dual clutch device (2).

6. The dual clutch device (2) according to Claim 5, **characterized in that** the hydraulic control device is formed of a control plate (50) in which channels (32, 36, 37) are provided for supplying and removing operating fluid.

7. The dual clutch device (2) according to Claim 6, **characterized in that** in the control plate (50) there are transfer openings (32) for operating fluid, which are connected with transfer openings (66) that are provided in the clutch device hub (10).

8. The dual clutch device (2) according to one of the preceding claims, **characterized in that** at least one of the clutch arrangements (8, 22) is a wet running clutch arrangement, in particular a multiplate clutch arrangement, which is operable with the help of the operating fluid supplied by the operating fluid pump (49).

9. The dual clutch device (2) according to one of the preceding claims, **characterized in that** radially between the outer transmission input shaft (14) and the clutch device hub (10) that surrounds it, a sealing location is provided that seals the pump.

10. The dual clutch device (2) according to Claim 9, **characterized in that** the seal location includes at least one radial shaft seal ring.

11. The dual clutch device (2) according to at least one of the preceding claims, **characterized in that** between the outer contour of the clutch device hub (10) and the inner contour of a control plate (50) surrounding it, at least one seal is provided.

12. The dual clutch device (2) according to Claim 11, **characterized in that** there are two seals with an axial space between them, there being at least one duct provided in the control plate (50) that leads in axially between them.

13. A drive train for a motor vehicle, having a dual clutch device (2) according to one of the preceding claims situated between a drive unit and a transmission.

14. The drive train according to Claim 13, **characterized in that** a torsional vibration damping device (84) is situated between the drive unit and the clutch device (2).

## Revendications

1. Dispositif d'embrayage double (2) pour la disposition dans une ligne de commande d'un véhicule automobile entre une unité de commande et une boîte de vitesses, le dispositif d'embrayage double (2) présentant essentiellement deux dispositifs d'embrayage (8, 22) pour deux arbres d'entrée de la boîte de vitesses (14, 18) et un moyeu de dispositif d'embrayage (10), et l'extrémité, côté boîte de vitesses, du moyeu de dispositif d'embrayage (10) étant raccordée à une pompe de fluide de service (46), la pompe de fluide de service (49) étant munie d'une pièce intérieure (56) concentrique en rotation, et la pompe de fluide de service (49) étant disposée radialement à l'extérieur des deux arbres d'entrée de boîte de vitesses, **caractérisé en ce que** la pièce intérieure (56) est supportée radialement depuis l'intérieur et **en ce que** ce support est réalisé au moyen d'un palier support (52) qui est raccordé au corps de pompe (48) de manière bloquée en rotation.

2. Dispositif d'embrayage double (2) selon la revendication 1, **caractérisé en ce qu'**un collet de centrage (53) est exécuté sur le palier support (52).

3. Dispositif d'embrayage double (2) selon la revendication 1 ou 2, **caractérisé en ce que** la pompe de fluide de service (49) est exécutée comme pompe à engrenage intérieur et **en ce que** la pièce intérieure (56) représente le pignon de pompe (56) de la pompe à engrenage intérieur.

4. Dispositif d'embrayage double (2) selon l'une quelconque des revendications 1 à 3, **caractérisé en ce que** sur le moyeu de dispositif d'embrayage (10) dépassent plusieurs - notamment deux - doigts d'entraînement (58, 59) en direction axiale, qui ont prise dans des poches (79, 80) exécutées de manière complémentaire, prévues sur la pièce intérieure (56) en rotation.

5. Dispositif d'embrayage double (2) selon l'une quelconque des revendications précédentes, **caractérisé en ce qu'**un dispositif de commande hydraulique (50) est disposé entre la pompe de fluide de service (49) et le dispositif d'embrayage double (2).

6. Dispositif d'embrayage double (2) selon la revendication 5, **caractérisé en ce que** le dispositif de commande hydraulique est formé par une plaque de commande (50), dans laquelle des canaux (32, 36, 37) sont prévus pour l'alimentation et l'évacuation d'un fluide de service.

7. Dispositif d'embrayage double (2) selon la revendication 6, **caractérisé en ce que** des ouvertures de transfert (32) de fluide de service sont prévues dans la plaque de commande (50), ces ouvertures de transfert communiquant avec des ouvertures de transfert (66) prévues dans le moyeu de dispositif d'embrayage (10).

8. Dispositif d'embrayage double (2) selon l'une quelconque des revendications précédentes, **caractérisé en ce qu'**au moins l'un des dispositifs d'embrayage (8, 22) est un dispositif d'embrayage fonctionnant de manière humide, notamment un dispositif d'embrayage multidisque, qui peut être commandé à l'aide du fluide de service fourni par la pompe de fluide de service (49).

9. Dispositif d'embrayage double (2) selon l'une quelconque des revendications précédentes, **caractérisé en ce qu'**une zone d'étanchéité rendant la pompe étanche est prévue radialement entre l'arbre extérieur d'entrée de boîte de vitesses (14) et le moyeu de dispositif d'embrayage (10) entourant l'arbre extérieur d'entrée de boîte de vitesses.

10. Dispositif d'embrayage double (2) selon la revendication 9, **caractérisé en ce que** la zone d'étanchéité comprend au moins un joint pour arbre tournant.

11. Dispositif d'embrayage double (2) selon au moins l'une quelconque des revendications précédentes, **caractérisé en ce qu'**au moins un joint est prévu entre le contour extérieur du moyeu de dispositif d'embrayage (10) et le contour intérieur d'une plaque de commande (50) entourant ce moyeu de dispositif d'embrayage.

12. Dispositif d'embrayage double (2) selon la revendication 11, **caractérisé en ce que** deux joints distants axialement sont prévus, et qu'au moins un canal prévu dans la plaque de commande (50) aboutit axialement entre ces joints.

13. Ligne de commande pour un véhicule automobile, comprenant un dispositif d'embrayage double (2) selon l'une quelconque des revendications précédentes, disposé entre une unité de commande et une boîte de vitesses.

14. Ligne de commande selon la revendication 13, **caractérisée en ce qu'**un dispositif d'atténuation de vibrations de torsion (84) est disposé entre l'unité de commande et le dispositif d'embrayage (2).
